Europäisches Patentamt

European Patent Office

Office européen des brevets

(11) Veröffentlichungsnummer: **0 244 852**

**A1**

## (12) EUROPÄISCHE PATENTANMELDUNG

(21) Anmeldenummer: **87106569.4**

(22) Anmeldetag: **06.05.87**

(51) Int. Cl.4: **A01F 12/44** , **A01F 7/06**

(30) Priorität: **09.05.86 US 861468**

(43) Veröffentlichungstag der Anmeldung:
**11.11.87 Patentblatt 87/46**

(84) Benannte Vertragsstaaten:
**BE DE ES FR GB**

(71) Anmelder: **DEERE & COMPANY**
**1 John Deere Road**
**Moline Illinois 61265(US)**

(72) Erfinder: **Hall, James William**
**3280 Quail Ridge**
**Bettendorf Iowa 52722(US)**
Erfinder: **West, Neil L.**
**6914 Valley Dr.**
**Bettendorf Iowa 52722(US)**
Erfinder: **Popelier, Maurice Alois**
**3121 Archer Dr.**
**E. Moline Illinois 61244(US)**
Erfinder: **Peters, Loren William**
**809 - 16th St.**
**Bettendorf Iowa 52722(US)**
Erfinder: **Klimmer, Josef W.**
**Röntgenstrasse 15**
**D-6660 Zweibrücken(DE)**

(74) Vertreter: **Feldmann, Bernhard et al**
**DEERE & COMPANY European Office, Patent**
**Department Steubenstrasse 36-42 Postfach**
**503**
**D-6800 Mannheim 1(DE)**

(54) **Mähdrescher.**

(57) Ein Mähdrescher mit einer nach dem Axialflußprinzip arbeitenden Trenntrommel (50) ist mit zahlreichen exzentrisch im Trenntrommelgehäuse angeordneten, sich radial erstrekkenden Erntegutbearbeitungselementen (72) ausgestattet, deren äußere Enden auf einer schneckenförmig verlaufenden Linie angeordnet sind, so daß sich das Erntegut spiralförmig durch das Trenntrommelgehäuse bewegt.

Fig. 2

## Mähdrescher

Die Erfindung bezieht sich auf einen Mähdrescher mit einer nach dem Axialflußprinzip arbeitenden Trennvorrichtung mit mindestens einer Trenntrommel, die Erntegut in Form einer Erntegutmatte spiralförmig durch einen zwischen der Trenntrommel und einem Trenntrommelgehäuse der Trennvorrichtung gebildeten Ringspalt bewegt, wobei der um eine Längsachse drehbare Rotor zahlreiche sich radial nach außen erstrekkende, fingerartige, auf einer exzentrischen Bahn verlaufende Erntegutbearbeitungselemente aufweist, die je einen äußeren Schaufelteil aufweisen, der gegenüber der Längsachse des Erntegutbearbeitungselementes abgewinkelt ist.

Es ist bereits eine stationäre Dreschmaschine bekannt (US-A-723 670), die mit einer sich in Längsrichtung des Mähdreschers erstreckenden Trenntrommel ausgerüstet ist, auf deren Achse zahlreiche Erntegutbearbeitungselemente angeordnet sind, die aus gebogenen Stangen bestehen. Jeweils zwei Stangen bilden zusammen eine Herzform und somit eine relative breite Förderfläche. Die beiden gegenüberliegenden Stangen sind jeweils endseitig zusammengeführt und erstrecken sich in die gleiche Richtung wie die Achse der Trenntrommel, so daß die Förderwirkung in Längsrichtung der Trenntrommel relativ schlecht ist.

Ferner ist eine Trennvorrichtung für einen Mähdrescher der eingangs aufgeführten Art bekannt, der nach dem Axialflußprinzip arbeitet und mit einem Rotor ausgerüstet ist, der in einem Trenngehäuse exzentrisch drehbar aufgenommen ist (EP-A-173 223). Auf dem Rotor sind zahlreiche als Finger ausgebildete Förderelemente vorgesehen, die zumindest für eine halbe Umdrehung in das Erntegut eintauchen und dabei vorwiegend über die Erntegutbewegung eine Axialbewegung mitmachen, um den Ausscheidungsvorgang des Erntegutes zu unterstützen.

Demgegenüber liegt der Erfindung die Aufgabe zugrunde, die äußeren Enden der Erntegutbearbeitungselemente derart im Trommelgehäuse auszurichten und anzuordnen, daß die Förderwirkung durch das Trenntrommelgehäuse gesteigert wird. Diese Aufgabe ist dadurch gelöst worden, daß der Schaufelteil eine mit Bezug auf die Drehrichtung nach vorne gerichtete Arbeitsfläche und nach hinten zeigende Rückseite aufweist, die gemeinsam mit den übrigen Arbeitsflächen bzw. Rückseiten der Erntegutbearbeitungselemente auf einer spiralförmigen Kreisbahn liegen und das Erntegut in einer spiralförmigen Matte durch das Trenntrommelgehäuse stromabwärts bewegen.

Durch die vorteilhafte Ausbildung und Anordnung der Erntegutbearbeitungselemente, insbesondere deren Enden, wird die Förderkapazität der Trenntrommel wesentlich gesteigert und der axiale Vorschub des Erntegutes verbessert. Die schaufelartig ausgebildeten Erntegutbearbeitungselemente bewirken auch eine Verbesserung der Trennwirkung des in den Ähren enthaltenen Erntegutes. Durch die exzentrische Anordnung der einzelnen Erntegutbearbeitungselement im Trenntrommelgehäuse und durch die vorteilhafte Ausrichtung der äußeren Enden der Erntegutbearbeitungselemente wird eine gute Durcharbeitung des Erntegutes und somit eine gute Trennwirkung erzielt. Gleichzeitig wird gewährleistet, daß die Erntegutbearbeitungselemente nur so lange durch die Strohmatte fahren, so lange sie sich durch den unteren Bereich des Trenntrommelgehäuses bewegen. Hierdurch wird auch eine gewiße Kehrwirkung an der Innenoberfläche des Trenntrommelgehäuses erzielt und somit verhindert, daß sich Erntegutreste in den Durchlaßöffnungen des Trenntrommelgehäuses festsetzen. Ferner ist es vorteilhaft, daß das Erntegutbearbeitungselement einen sich radial erstreckenden, rechtwinklig zur Schwenkachse des Erntegutbearbeitungselementes verlaufenden, fingerartigen Teil aufweist, der ebenfalls rechtwinklig zur Drehachse der Trenntrommel verläuft. In vorteilhafter Weise können die einzelnen Erntegutbearbeitungselemente federelastisch ausgebildet sein bzw. über ein elastisches Lager mit der Achse der Trenntrommel verbunden sein, so daß sie beim Erntearbeitseinsatz ausweichen können, wenn der Widerstand, der auf die äußeren Enden der Erntegutbearbeitungselemente einwirkt, zu groß wird.

Weitere Ausgestaltungen der Erfindung gehen aus den Unteransprüchen hervor.

Im folgenden ist die Erfindung an Hand von mehrere Ausführungswege darstellenden Zeichnungen näher erläutert. Es zeigen:

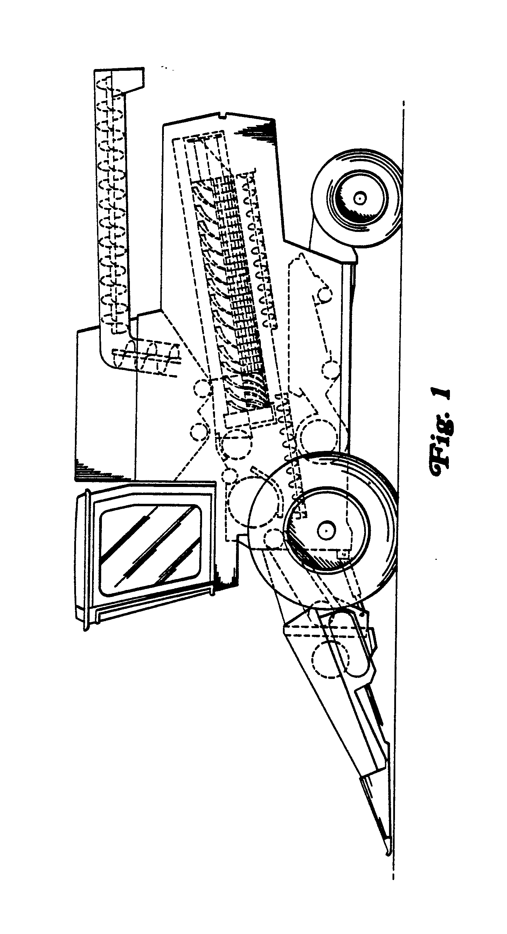

Fig. 1 eine schematische Darstellung eines Mähdreschers mit einer Dreschtrommel nach dem Axialflußprinzip in Seitenansicht,

Fig. 2 eine perspektivische Darstellung der Trenntrommel,

Fig. 3 einen einzelnen Trennfinger, der auf der Trenntrommel angeordnet ist,

Fig. 4 eine Ansicht entlang der Linie 4-4 gemäß Fig. 3,

Fig. 5 und 6 die äußeren Enden der Trennfinger in der Ansicht entlang der Linie 5-5 und 6-6 der Fig. 3,

Fig. 7 eine perspektivische Darstellung des äußeren Endes eines weiteren Trennfingers,

Fig. 8 eine Schnittdarstellung der Trenntrommel,

Fig. 9 eine perspektivische Darstellung eines weiteren Ausführungsbeispieles eines Trennfingers,

Fig. 10 eine Schnittdarstellung einer weiteren Trenntrommel mit den Trennfingern gemäß Fig. 9,

Fig. 11 eine Teilansicht eines dritten Ausführungsbeispieles eines Fingers mit einem federelastischen Verbindungselement,

Fig. 12 ein weiteres Ausführungsbeispiel einer Trenntrommel mit den Trennfingern gemäß Fig. 11.

In der Zeichnung ist mit 10 ein Mähdreschergehäuse eines selbstfahrenden Mähdreschers bezeichnet, der nach dem Axialflußprinzip arbeitet. Der Mähdrescher weist zwei vordere antreibbare Laufräder 12 und zwei hintere steuerbare Laufräder 14 auf. Am vorderen Ende des Mähdreschergehäuses 10 befindet sich eine Fahrerkabine 16, unter der eine Erntebergungsvorrichtung 18 angeordnet ist. Die Erntebergungsvorrichtung 18 besteht aus einer Schneidwerksplatform und einem Schrägfördergehäuse 20, das an das vordere Ende des Mähdreschergehäuses 10 vertikal schwenkbar angelegt ist. Über die Erntebergungsvorrichtung 18 gelangt das Erntegut zu einer aus Dreschtrommel 22 und Dreschkorb 24 gebildeten Dreschvorrichtung.

Stromabwärts von der Dreschtrommel 22 ist ein Trenntrommeleinzugsteil 26 vorgesehen, dem zwei parallel zueinander angeordneten Trenntrommeln 28 nachgeschaltet sind. Die Trenntrommel 28 ist in einem Trenntrommelgehäuse gelagert, das am Ende mit einer Auslaßöffnung 30 versehen ist. Das aus dem Trenntrommelgehäuse abgeschiedene Erntegut gelangt über eine Rückführvorrichtung 32 und 34 zu einer Reinigungsvorrichtung 36.

Die Trennvorrichtung besteht, wie bereits erwähnt, aus zwei nebeneinander angeordneten Trenntrommeln 28, wobei in der Beschreibung lediglich die linke Trenntrommel im Detail veranschaulicht und beschrieben ist. Eine genaue Beschreibung der übrigen Teile der Trenntrommel ist in der europäischen Patentanmeldung 173 223 enthalten.

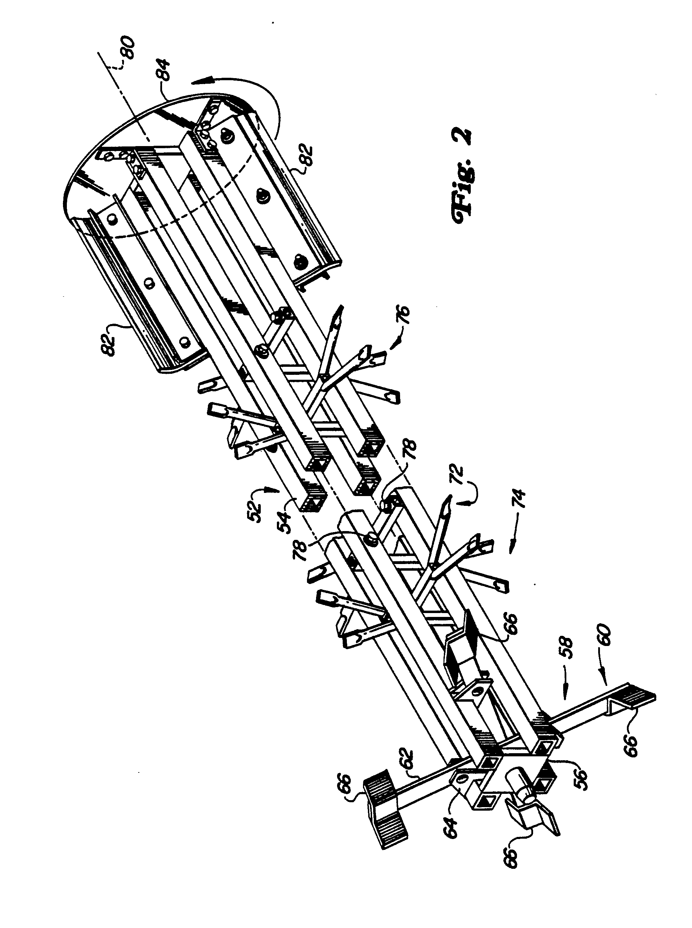

Die Trenntrommel 50 weist, wie aus Fig. 2 hervorgeht, einen Rahmen 52 auf, der aus vier parallelen, rechtförmig ausgebildeten Rohrträgern 54 besteht, die mit Abstand zueinander angeordnet und über Platten 56 miteinander verbunden sind. Der Frontteil bzw. der Rotorteiler 58 besteht aus zwei diametral gegenüberliegenden Paddelarmen 60, die aus flachen Blechstreifen 62 gebildet sind, an denen endseitig Schaufelelemente 66 vorgesehen sind. Die Paddelarme 60 sind über Laschen 64 mit den Rohrträgern 54 fest verbunden.

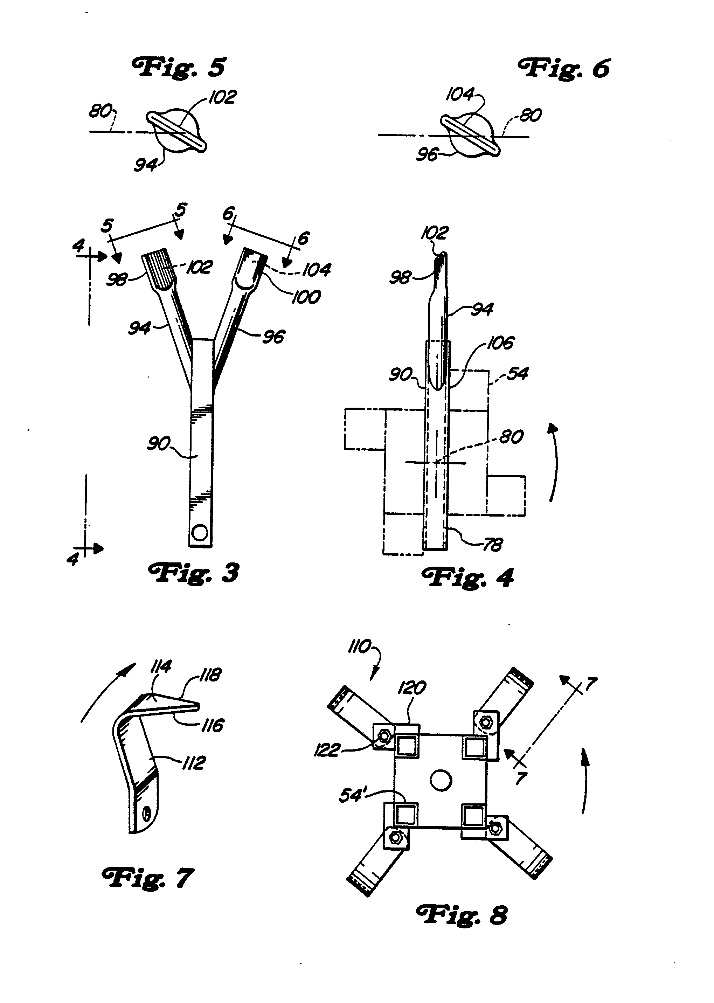

Die Paddelarme 60 bzw. die Erntegutbearbeitungselemente sind im Beschickungsteil bzw. Einzugsteil 74 und in dem Trennteil 76 der Trenntrommel 28 bzw. 50 vorgesehen. Das Erntegutbearbeitungselement 72 ist mittels eines Gelenkbolzens 78 an den Rahmen 52 der Trenntrommel 50 angeschlossen, so daß die Bearbeitungselemente in einer Ebene verschwenkbar sind, die parallel zur Drehachse 80 der Trenntrommel 50 verläuft. Das stromabwärts liegende Ende des Trennteiles 76 weist einen Austragförderer bzw. eine Paddelwalze 82 auf, die innenseitig durch eine konzentrisch zur Drehachse angeordnete Kreisplatte 84 begrenzt wird. Die Erntegutbearbeitungselemente 72 sind (Fig. 2) y-förmig ausgebildet und mittels des Gelenkbolzens 78 am Rahmen 52 schwenkbar angeschlossen. Wie aus Fig. 3 hervorgeht, besteht das Erntebergungselement 72 aus einem rechteckförmig ausgebildeten Rohr, an dessen beiden außenliegenden Seiten sich v-förmig nach außen erstreckende Arme 94 und 96 angeschlossen sind, die beispielsweise mit dem Arm 90 verschweißt sein können. Die Arme 94 und 96 bestehen aus einem kreisrunden Rohr, das jeweils am äußeren Ende 8 zusammengedrückt ist und somit ein flaches Schaufelteil bildet, das aus zwei parallel zueinander verlaufenden Seitenteilen 98 und 102 gebildet ist. Die Seitenteile 98 und 102 befinden sich am linken Arm 94, während sich zwei weitere Seitenteile 100 und 104 am rechten Arm 96 befinden. Die vorteilhafte Ausbildung der Arme 94 und 96, insbesondere deren Enden, geht aus den Figuren 5 und 6 hervor. Die Arme 94 und 96 mit den daran angeschlossenen Schaufelteilen dienen zum Weitertransport des Erntegutes auf einer schneckenförmigen Spirale, die sich in Längsrichtung der Drehachse 80 der Trenntrommel 50 erstreckt. Die Seitenteile 102 und 104 sind mit Bezug auf die Drehachse 80 um 30° verdreht (siehe Fig. 6). Das Gleiche gilt auch für die Seitenteile 98 und 102 gemäß Fig. 5. Der Gelenkbolzen 78 in der Bohrung des Erntebergungselementes 72 weist ein ausreichendes Spiel auf, so daß die Anlagefläche 106 des Armes 90 gegen den Rohrträger 54 zur Anlage kommen kann, wenn sich das Erntebergungselement 72 entsprechend verbiegt bzw. entsprechend verschwenkt wird.

Das Ausführungsbeispiel gemäß den Figuren 7 und 8 zeigt ein Erntegutbearbeitungselement 110, das im Gegensatz zum Erntegutbearbeitungselement 72 aus einem Teil geformt ist. Das Erntegutbearbeitungselement 110 besteht aus einem Flachmaterial 112 mit einer sich radial nach außen erstreckenden Spitze 114, die aus nach vorne zusammenlaufenden Kanten 116 und 118 gebildet ist. Die Kanten 116 und 118 bilden mit der Drehachse 80 ebenfalls einen Winkel von 30°. Die Erntegutbearbeitungselemente 110 sind mittels je eines Gelenkbolzens 122 an je einer Halterung 120 schwenkbar angeschlossen, die mit dem Rohrträger 54 fest verbunden ist. Somit können die Erntegutbearbeitungselemente 110 um eine Achse schwenken, die parallel zur Drehachse 80 der Trenntrommel 50 verläuft.

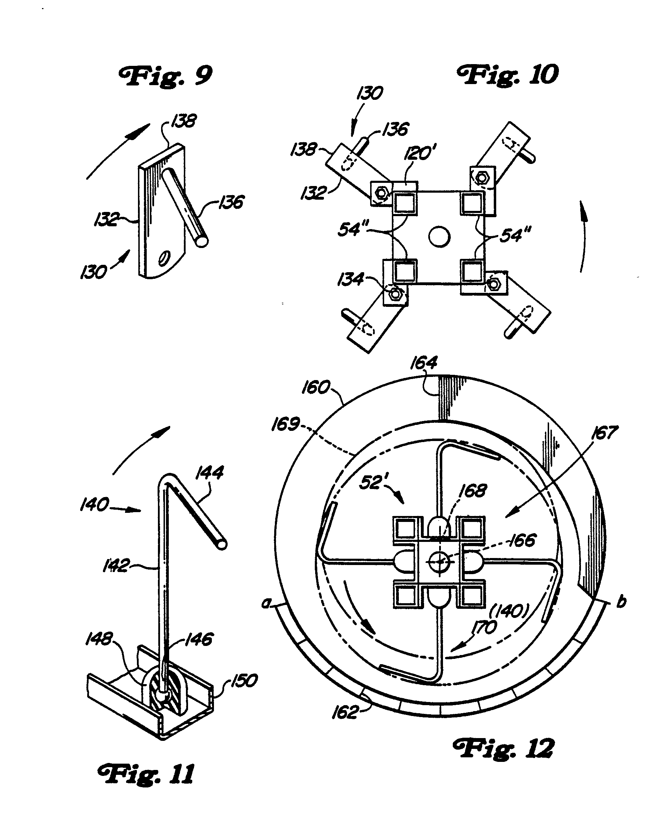

In einem dritten Ausführungsbeispiel gemäß den Figuren 9 und 10 besteht das Erntegutbearbeitungselement 130 aus einem flachen im Querschnitt rechteckförmigen Träger bzw. Arm 132, der ebenfalls mittels eines Gelenkbolzens 134 an einer Halterung 120 schwenkbar angeschlossen ist. An dem Arm 132 ist eine kreisrunde Stange 136 mit Bezug auf die Längsachse des Erntegutbearbeitungselementes 130 rechtwinklig angeschlossen. Die Stange 136 bildet mit der Oberfläche des Armes 132 einen Winkel von etwa 30°. Das Ende 138 der Stange 136 sitzt hierzu in einer im Arm 132 schräg verlaufenden Bohrung und ist mit dieser beispielsweise verschweißt.

Im vierten Ausführungsbeispiel gemäß Figuren 11 und 12 besteht das Erntegutbearbeitungselement 140 aus einer einteiligen, im Querschnitt kreisrunden Stange 142, deren oberes Ende rechtwinklig abgebogen ist und ein Stangenteil 144 aufweist. Das Stangenteil 144 ist mit Bezug auf die Achse 80 um ca. 30° nach außen verdreht. Die Verdrehung des Stangenteils 144 entspricht in etwa der Verdrehung der Seitenteile 98 - 104 gemäß Fig. 5 und 6. Das um 90° abgewinkelte Stangenteil 144 kann ferner so abgewinkelt sein, daß es sich in etwa dem Rotationskreis der Trenntrommel angleicht (siehe Fig. 12). Das Erntegutbearbeitungselement 140 ist endseitig kugelförmig ausgebildet und sitzt in einer federelastischen bzw. gummiartigen Halterung 148, die in einem im Querschnitt u-förmig ausgebildeten Träger 150 befestigt ist. Der Träger 150 ist, wie aus Fig. 12 hervorgeht, Bestandteil des Rahmens 52' und ist hierzu zwischen den Rohrträgern 54' angeordnet und mit diesen fest verbunden. Die Arbeitsweise und Funktion der Trenntrommeln 28 bzw. 50 und 50' ist im Detail in der EP-A 173 223 beschrieben. Wie aus Fig. 12 ferner hervorgeht, ist das Trenngehäuse 160 zylinderförmig ausgebildet und mit zahlreichen Durchlaßöffnungen versehen, die insbesondere im unteren Bereich des Trenngehäuses vorgesehen sind. Es ist natürlich auch möglich, die einzelnen Auslaßöffnungen auf dem gesamten Umfang des Trenngehäuses zu verteilen. Vorzugsweise ist der untere Teil des Trenngehäuses als Trennkorb 162 ausgebildet, der mit zahlreichen Durchlaßöffnungen ausgestattet ist. Im oberen Bereich des Trenngehäuses 160 be finden sich schneckenförmig verlaufende Führungsrippen 164, deren Höhe allmählich abnimmt, so daß sie in die Oberfläche des inneren Trenngehäuses übergehen. Im normalen Arbeitseinsatz wird das Erntegut durch das Trenngehäuse 160 bewegt, wobei die Erntegutmatte 169 aufgrund der spiralförmig angeordneten Führungsrippen 164 einen spiralförmigen Verlauf aufweist. Aufgrund der exzentrischen Anordnung der Rotationsebene der äußeren Enden der Finger bzw. der Erntgutbearbeitungselemente 140 (siehe Fig. 12) greifen die Erntegutbearbeitungselemente 140 insbesondere im unteren Bereich des Trenngehäuses stärker in die Erntegutmatte ein, während im oberen Bereich die Erntegutkontaktelemente wieder allmählich aus dem Erntegut herausbewegt werden. Wie aus Fig. 12 hervorgeht, bewegt sich jeweils das untenliegende Erntegutkontaktelement in dem Bereich zwischen a und b relativ dicht an der Innenoberfläche des Trennkorbes 162 entlang. Dieser Bereich wird als Trennphase bezeichnet. In dieser Phase wird durch die Kehrwirkung der Erntegutbearbeitungselemente die Trennung des Erntegutes aus dem Strohgemisch besonders begünstigt. Ferner wird durch diesen Kehrvorgang der Erntegutbearbeitungselemente gewährleistet, daß die Oberfläche des Trennkorbes 162 sauber bleibt und sich keine Strohreste in den Öffnungen des Trennkorbes festsetzen. Der gleiche Arbeitsvorgang gilt auch für die übrigen Ausführungsbeispiele.

Bewegt sich nunmehr das Erntegutbearbeitungselement 170 aus dem Trennbereich a, b heraus, so bewegt sich das Erntegutbearbeitungselement 170 ebenfalls allmählich aus der Erntegutmatte 169 heraus. Durch eine ausreichende Geschwindigkeit der Trenntrommel wird jedoch sichergestellt, daß das Erntegut bzw. die Erntegutmatte 169 weiter an der Innenseite des Trenngehäuses 160 entlang bewegt wird und dabei auch durch die Zwischenräume der mit Abstand zueinander angeordneten, spiralförmig verlaufenden Führungsrippen 164, die sicherstellen, daß das Erntegut sich allmählich spiralförmig der Auslaßöffnung 30 nähert.

Die Y-Form des Erntegutbearbeitungselements 72 gemäß Fig. 2 ist im Detail in den Figuren 3 und 4 veranschaulicht. Die rohrförmige Ausbildung des Erntegutbearbeitungselementes 72 führt zu einem sehr kräftigen, widerstandsfähigen Arbeitswerkzeug bei geringem Gewicht. Durch die vorteilhafte Anlage des äußeren Teils des Erntegutbearbeitungselementes 72 gegen die Rohrträger 54 der Trenntrommel 50 wird die Widerstandskraft des Erntegutbearbeitungswerkzeuges weiterhin vergrößert. Durch die seitliche Ausbiegung bzw. die seitliche Schwenkung der Erntegutbearbeitungswerkzeuge wird weiterhin der Erntegutfluß durch das Trenntrommelgehäuse begünstigt. Die Erntegutbearbeitungselemente richten sich jedoch aufgrund der Zentrifugalkräfte normalerweise radikal aus, wenn sie nicht auf größere Hindernisse, die im Erntegut enthalten sein können, treffen. Treten derartige Hindernisse auf, so können die Erntegutbearbeitungswerkzeuge aufgrund ihrer Gelenkachse ohne weiteres ausweichen. Die Erntegutbearbeitungswerkzeuge gemäß Fig. 9 sind insbesondere für die Bearbeitung von Maisgut vorteilhaft.

Die schlanke Form des Erntegutbearbeitungselementes gemäß Fig. 11 bewirkt eine gute Durchmischung des Erntegutes, ohne daß dieses stark verdichtet wird.

## Ansprüche

1. Mähdrescher mit einer nach dem Axialflußprinzip arbeitenden Trennvorrichtung mit mindestens einer Trenntrommel (50), die Erntegut in Form einer Erntegutmatte (169) spiralförmig durch einen zwischen der Trenntrommel (50) und einem Trenntrommelgehäuse (28) der Trennvorrichtung gebildeten Ringspalt bewegt, wobei der um eine Längsachse (80) drehbare Rotor zahlreiche sich radial nach außen erstreckende, fingerartige, auf einer exzentrischen Bahn verlaufende Erntegutbearbeitungselemente (72) aufweist, die je einen äußeren Schaufelteil (98 bis 104) aufweisen, der gegenüber der Längsachse des Erntegutbearbeitungselementes abgewinkelt ist, dadurch gekennzeichnet, daß der Schaufelteil (98 bis 104) eine mit Bezug auf die Drehrichtung nach vorne gerichtete Arbeitsfläche und nach hinten zeigende Rückseite aufweist, die gemeinsam mit den übrigen Arbeitsflächen bzw. Rückseiten der Erntegutbearbeitungselemente (72) auf einer spiralförmigen Kreisbahn liegen und das Erntegut in einer spiralförmigen Matte durch das Trenntrommelgehäuse (28) stromabwärts bewegen.

2. Mähdrescher nach Anspruch 1, dadurch gekennzeichnet, daß das Erntegutbearbeitungselement (72) einen sich radial erstreckenden, rechtwinklig zur Schwenkachse des Erntegutbearbeitungselementes verlaufenden, fingerartigen Teil aufweist, der ebenfalls rechtwinklig zur Drehachse (80) der Trenntrommel (50) verläuft.

3. Mähdrescher nach Anspruch 2, dadurch gekennzeichnet, daß die Erntegutbearbeitungselemente (72) diametral gegenüberliegend angeordnet sind.

4. Mähdrescher nach Anspruch 3, dadurch gekennzeichnet, daß der Rahmen (52) zur Aufnahme der Erntegutbearbeitungselemente (72) zahlreiche Abstützflächen aufweist, gegen die jeweils der im Bereich der Schwenkachse der Erntegutbearbeitungselemente liegende Teil gleitend anliegt, wenn er um seine Schwenkachse schwenkt.

5. Mähdrescher nach Anspruch 4, dadurch gekennzeichnet, daß das Erntegutbearbeitungselement (72) als Stange ausgebildet ist, die einen sich radial nach außen erstreckenden Schaufelteil (102, 104) aufweist, der axial gedreht und flach ausgebildet ist und die auf das Arntegut einwirkende Arbeitsfläche bildet.

6. Mähdrescher nach Anspruch 5, dadurch gekennzeichnet, daß das Erntegutbearbeitungselement (72) als Rohr (94, 96) ausgebildet ist, dessen sich radial nach außen erstreckendes Ende flach zusammengedrückt ist.

7. Mähdrescher nach Anspruch 2, dadurch gekennzeichnet, daß das Erntegutbearbeitungselement (72) endseitig zwei gabelförmig angeordnete Arme (94, 96) aufweist und daß ein jeder Arm endseitig eine auf das Erntegut einwirkende Arbeitsfläche aufweist.

8. Mähdrescher nach einem oder mehreren der vorherigen Ansprüche, dadurch gekennzeichnet, daß die Schwenkachse des Erntegutbearbeitungselementes (72) parallel zur Drehachse der Trenntrommel (50) verläuft.

9. Mähdrescher nach Anspruch 1, dadurch gekennzeichnet, daß der Schaufelteil bzw. Stangenteil (136) des Erntegutbearbeitungselementes (130) mit Bezug auf den Rotationskreis des äußeren Endes des Erntegutbearbeitungselementes nach innen versetzt ist.

10. Mähdrescher nach Anspruch 9, dadurch gekennzeichnet, daß das Erntegutbearbeitungselement (130) aus einem flachen, einen rechteckigen Querschnitt aufweisenden Träger (132) besteht, wobei die gegenüberliegenden schmalen Kanten des Trägers auf der schneckenförmigen Bewegungsbahn des Trägers verlaufen und der Schaufelteil (136) nach hinten geneigt und rechtwinklig auf der breiten Seite des Trägers angeordnet ist.

11. Mähdrescher nach Anspruch 1, dadurch gekennzeichnet, daß das Erntegutbearbeitungselement (140) aus einer durchgehend ausgebildeten L-förmigen Stange (142, 144) besteht.

12. Mähdrescher nach Anspruch 8, dadurch gekennzeichnet, daß die Schwenkachse des Erntegutbearbeitungselementes (72) zwischen der Drehachse (80) der Trenntrommel (50) und dem äußeren Ende des Erntegutbearbeitungselementes liegt.

13. Mähdrescher nach Anspruch 1, dadurch gekennzeichnet, daß das Erntegutbearbeitungselement (140) über eine federelastische Halterung (148) an den Rahmen (52) der Trenntrommel (50) angeschlossen ist.

*Fig. 1*

0 244 852

Fig. 2

Fig. 5

Fig. 6

Fig. 3

Fig. 4

Fig. 7

Fig. 8

0 244 852

Fig. 9

Fig. 10

Fig. 11

Fig. 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|-----------|------------------------------------------------------------------------------------|-------------------|------------------------------------------|
| D,Y | EP-A-0 173 223 (DEERE)<br>* Insgesamt * | 1,3,5 | A 01 F 12/44<br>A 01 F 7/06 |
| A | | 4,7,12 | |
| | --- | | |
| Y | DE-C- 600 603 (SCHLAYER)<br>* Insgesamt * | 1,3,5 | |
| | --- | | |
| A | FR-A-1 343 643 (LAGOUARDE) | | |
| | --- | | |
| A | US-A-4 408 618 (WITZEL) | | |
| | --- | | |
| A | US-A-4 178 942 (NUSSER) | | |
| | --- | | RECHERCHIERTE SACHGEBIETE (Int. Cl.4) |
| A | GB-A- 380 452 (SCHLAYER) | | A 01 F |
| | --- | | |
| A | US-A-1 653 153 (DAVIS) | | |
| | --- | | |
| A | EP-A-0 173 225 (DEERE) | | |
| | --- | | |
| A | US-A-3 613 691 (WILSHUSEN) | | |
| | --- -/- | | |

Der vorliegende Recherchenbericht wurde für alle Patentansprüche erstellt.

| Recherchenort | Abschlußdatum der Recherche | Prüfer |
|---------------|-----------------------------|--------|
| DEN HAAG | 20-07-1987 | DE LAMEILLIEURE D. |

Europäisches
Patentamt

**EUROPÄISCHER RECHERCHENBERICHT**

Nummer der Anmeldung

EP  87 10 6569

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 503 693   (FAHR) | | |
| | ----- | | |
| | | | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| DEN HAAG | 20-07-1987 | DE LAMEILLIEURE D. |